# EUROPEAN PATENT SPECIFICATION

(11) **EP 2 803 834 B1**
(45) Date of publication and mention of the grant of the patent: **24.08.2016**
(21) Application number: 14160241.7
(22) Date of filing: 17.03.2014
(51) Int. Cl.: F02M 26/35, F02M 26/22, F01K 23/10, F01K 23/06, F01N 5/02, F02G 5/02

(54) **Arrangement for recovery of thermal energy from exhaust gases from a combustion engine**
Anordnung zur Rückgewinnung von Wärmeenergie aus Abgasen einer Brennkraftmaschine
Agencement pour la récupération de l'énergie thermique de gaz d'échappement d'un moteur à combustion

(30) Priority: 27.03.2013 SE 1350391
(43) Date of publication of application: 19.11.2014
(73) Proprietor: Scania CV AB, 151 87 Södertälje (SE)
(72) Inventor: Sarby, Håkan, 141 42 Huddinge (SE)
(74) Representative: Scania CV AB

(56) References cited:
- EP-A1- 1 724 453
- EP-A1- 2 180 171
- WO-A1-2012/009526
- WO-A1-2012/096958
- WO-A2-2010/000284
- DE-A1-102009 050 263
- DE-B3-102009 056 822

## Description

### BACKGROUND TO THE INVENTION AND PRIOR ART

The present invention relates to an arrangement for recovery of thermal energy from exhaust gases arising from a combustion engine according to the preamble of claim 1.

WHR (waste heat recovery) systems are increasingly being used in vehicles to convert thermal energy to mechanical energy (DE 10 2009050263). WHR systems comprise a pump which pressurises and circulates a medium in a closed circuit. The circuit comprises one or more evaporators in which the medium is warmed and vaporised by one or more heat sources. The vaporised medium thereby acquires a raised temperature and a raised pressure. The warmed and pressurised medium is then led to an expander such as a turbine in which it expands so that mechanical energy is generated. The mechanical energy may be used directly for various kinds of operating purposes or be converted to and stored as electrical energy. After the medium has expanded in the turbine, it is led to a condenser in which it is cooled so that it condenses and reverts to liquid form. The liquid medium is thereafter pressurised again by the pump. A WHR system makes it possible for thermal energy to be recovered from the exhaust gases arising from a combustion engine and be used for operation of a vehicle. The vehicle may thus in similar operating situations achieve reduced fuel consumption and reduced emissions of carbon dioxide.

Emissions of nitrogen oxides from combustion engines may be reduced by recirculation of exhaust gases. The recirculating exhaust gases are cooled in at least one cooling device before being led back to the engine. In a vehicle they are usually cooled in an EGR cooler by coolant or air, in which case their thermal energy is cooled away to the surroundings. In the case of supercharged combustion engines which have a turbo unit with a turbine and a compressor, the recirculating exhaust gases enter the exhaust line at a point upstream of the turbine in what may be called a short-route EGR system, or at a point after the turbine in what may be called a long-route EGR system. A long-route EGR system also achieves a certain reduction in the engine's fuel consumption and emissions of nitrogen dioxides.

In using WHR systems which recover thermal energy from exhaust gases, account has to be taken of the exhaust cleaning components situated in the exhaust line. The exhaust line from a supercharged diesel engine may comprise an oxidation catalyst DOC (diesel oxidation catalyst), a particle filter DPF (diesel particulate filter), an injection device for a urea solution, an SCR (selective catalytic reduction) catalyst and an ammonia slip catalyst ASC. The exhaust gases from the engine are here led, after the turbine, to the oxidation catalyst, in which part of the nitrogen monoxide in them is oxidised to nitrogen dioxide. This may result in substantially equal proportions of nitrogen dioxide and nitrogen monoxide in the exhaust gases. When the exhaust gases reach the downstream SCR catalyst, they should preferably contain equal amounts of nitrogen monoxide and nitrogen dioxide for optimum reduction of nitrogen oxides. Raising the proportion of nitrogen dioxide in the exhaust gases is also important with a view to achieving continuous burning of soot particles in the downstream particle filter, since it lowers the combustion temperature of the particles. Exhaust gases which have passed through the oxidation catalyst are led to the particle filter, in which soot particles are caught and burnt. The injection device injects urea solution into the exhaust line at a point upstream of the SCR catalyst. The urea solution is vaporised by the warm exhaust gases, with the result that ammonia is formed in the exhaust gases. The ammonia and the nitrogen oxides in the exhaust gases react with one another when they reach the SCR catalyst, resulting in the formation of nitrogen gas and water vapour. The engine's emissions of nitrogen oxides may be greatly reduced by correct dosage of urea solution. Any remaining ammonia in the exhaust gases will be eliminated in the ammonia slip catalyst situated downstream of the SCR catalyst.

### SUMMARY OF INVENTION

The object of the present invention is to propose an arrangement which is capable of recovering thermal energy both from exhaust gases and from recirculating exhaust gases in an efficient way by means of a WHR system and which at the same time is of relatively simple and compact construction.

This object is achieved with the arrangement of the kind mentioned in the introduction which is characterised by the features indicated in the characterising part of claim 1. The recirculating exhaust gases are taken from a point in the exhaust line downstream of the expander, which may be a turbine or a piston pump. In this case a long-route EGR system is thus used. The recirculating exhaust gases will here usually be at a reduced pressure and a reduced temperature relative to the pressure and the temperature of the exhaust gases in the exhaust line at a point upstream of the expander. The recirculating exhaust gases in such an EGR system will however be so warm that they have to be cooled before being mixed with air and recirculated to the engine. According to the invention a WHR system with a circulating medium is used to absorb heat from the recirculating exhaust gases. The recirculating exhaust gases thus undergo effective cooling while at the same time the WHR system receives thermal energy which may be converted to mechanical energy. This means that the EGR system need not be provided with a separate EGR cooler. The mechanical energy which the WHR system recovers may be used for operation of the vehicle or components of the vehicle.

The WHR system comprises a common evaporator for recovering thermal energy both from the recirculating exhaust gases in the return line and from the exhaust gases in the exhaust line. Such a common evaporator may be somewhat smaller than two separate evaporators with a similar capacity. A common evaporator will also occupy less space in a vehicle than two separate evaporators. The arrangement according to the invention may thus be of compact construction. An EGR system in long-route form will have a positive effect on fuel consumption. A WHR system cooperating with a long-route EGR system is a very advantageous combination as regards reducing fuel consumption and emissions of carbon dioxide from a combustion engine.

In one embodiment of the present invention the evaporator comprises a first element in which the circulating medium is warmed as a first stage by the recirculating exhaust gases in the return line, and a second element in which the circulating medium is warmed as a second stage by the exhaust gases in said section of the exhaust line. The exhaust gases in the exhaust line and the recirculating exhaust gases will be at substantially the same temperature when they reach the evaporator. For the WHR system it makes no difference whether the exhaust gases or the recirculating exhaust gases take care of the first or second stage of the warming of the medium, but the medium in the WHR system will be at a lower temperature in the first stage than in the second stage. This means that the recirculating exhaust gases in the return line which are cooled in the first stage will undergo more effective cooling than the exhaust gases in the exhaust line. Effective cooling of the recirculating exhaust gases is important from several perspectives. It results in a lower combustion temperature and a lower nitrogen oxides content in the exhaust gases. The volume of the recirculating exhaust gases also becomes smaller, allowing a larger amount of the exhaust gases to be recirculated in the engine. The first and second elements of the evaporator may be separated by an internal wall so that the exhaust gases and the recirculating exhaust gases are kept separate from one another. Alternatively the evaporator may be so configured that the exhaust gases and the recirculating exhaust gases are cooled in parallel in the evaporator, in which case they will undergo similar cooling by the medium in the evaporator.

In another embodiment of the present invention the exhaust line comprises an SCR catalyst and an injection device which is adapted to injecting urea solution at a point in the exhaust line downstream of the point in the exhaust line where the return line receives exhaust gases. A usual method for reducing nitrogen oxides in exhaust gases is to inject urea solution into the exhaust line upstream of an SCR catalyst. The urea solution is vaporised by the warm exhaust gases in the exhaust line, resulting in the formation of ammonia. Ammonia and nitrogen oxides in the exhaust gases are reduced in the SCR catalyst to nitrogen gas and water vapour. The injection of the urea solution thus takes place in this case downstream of the point where exhaust gases are recirculated from the exhaust line. The recirculating exhaust gases will therefore not contain any urea solution. Supply of urea solution may result in the formation of aggregations, which needs to be prevented in the lines which recirculate exhaust gases.

In another embodiment of the present invention the SCR catalyst is situated in a section of the exhaust line which is upstream of the evaporator. The efficiency of an SCR catalyst will vary with the temperature of the exhaust gases. An SCR catalyst works best at a relatively high exhaust temperature. It is therefore advantageous that the evaporator which absorbs heat from the exhaust gases be at a point downstream of the SCR catalyst so that the latter can receive warm exhaust gases.

In another embodiment of the present invention the exhaust line comprises an oxidation catalyst and a particle filter which are situated at a point upstream of the point where the return line receives exhaust gases from the exhaust line. In this case exhaust gases which have acquired a raised content of nitrogen dioxide in the oxidation catalyst and have been cleaned of soot particles in the particle filter are recirculated. The recirculating exhaust gases in this case will be relatively clean when they reach the engine. The lines which recirculate exhaust gases may thus be kept rather free from soot deposits. Alternatively the return line may receive exhaust gases from the exhaust line at a point upstream of said components, in which case the recirculating exhaust gases will undergo a smaller pressure drop than when circulated through the oxidation catalyst and the particle filter.

In one embodiment of the present invention the arrangement comprises a second EGR system which has a second return line for recirculation of exhaust gases from a point in the exhaust line upstream of the turbine and which is therefore a short-route system. In this case the arrangement comprises both a short-route EGR system and a long-route EGR system, making it possible to recirculate exhaust gases to the engine from two different points in the exhaust line.

In one embodiment of the present invention the WHR system comprises a second evaporator in which the circulating medium is caused to absorb thermal energy from the recirculating exhaust gases in the second return line. In this case the WHR system may absorb thermal energy from both the first evaporator and the second evaporator. The recirculating exhaust gases in the short-route EGR system may in certain operating situations deliver recirculating exhaust gases at a very high temperature. The second evaporator is therefore situated with advantage downstream of the first evaporator to allow the medium in the WHR system to undergo a final stage of warming in the second evaporator to a very high temperature before being led to the expander.

In one embodiment of the present invention the arrangement comprises a control unit adapted to recirculating exhaust gases through whichever return line has the exhaust gases at the higher temperature when they reach the respective evaporators. In most operating situations the recirculating exhaust gases in a short-route EGR system will be at a higher temperature than in a long-route EGR system. In certain operating states, however, the recirculating exhaust gases in a long-route system may be at a higher temperature than in a short-route system. Such an operating state may occur in situations where there is little load upon the engine after a period of operation under heavy load. The exhaust gases upstream of the turbine may be at a relatively low temperature when there is little load upon the engine. The exhaust line downstream of the turbine may comprise various components which have good heat storage characteristics. These components will be warmed to a high temperature by the warm exhaust gases when there is heavy load upon the engine. Owing to their good heat storage characteristics, they will maintain their high temperature for a relatively long time after the heavy load ceases. These components will therefore warm exhaust gases at a lower temperature which pass in contact with them. One such component may be an oxidation catalyst. Accordingly the recirculating exhaust gases in a long-route EGR system may periodically be at a higher temperature than in a short-route EGR system. In this case it is possible to opt for the medium in the WHR system to be warmed by the recirculating exhaust gases in whichever EGR system has at the time the higher exhaust temperature. The WHR system may thus be used optimally in substantially all operating states of the engine.

In one embodiment of the present invention the arrangement comprises a first sensor to monitor the temperature of the exhaust gases in the exhaust line close to the first return line, and a second sensor to monitor the temperature of the exhaust gases in the exhaust line close to the second return line, and the control unit is adapted to receiving information from said temperature sensors and to recirculating exhaust gases through whichever return line can deliver the recirculating exhaust gases at the higher temperature. From suitably located temperature sensors the control unit will easily receive information continuously about which return line is delivering recirculating exhaust gases at the higher temperature. The control unit may therefore operate an EGR valve in each of the return lines so that exhaust gases are only recirculated in the line which has the higher temperature.

### BRIEF DESCRIPTION OF THE DRAWINGS

Preferred embodiments of the invention are described below by way of examples with reference to the attached drawings, in which
- Fig. 1: depicts an arrangement according to the present invention which comprises a WHR system and a long-route EGR system, and
- Fig. 2: depicts an arrangement according to the present invention which comprises a WHR system, a short-route EGR system and a long-route EGR system.

### DETAILED DESCRIPTION OF PREFERRED EMBODIMENTS OF THE INVENTION

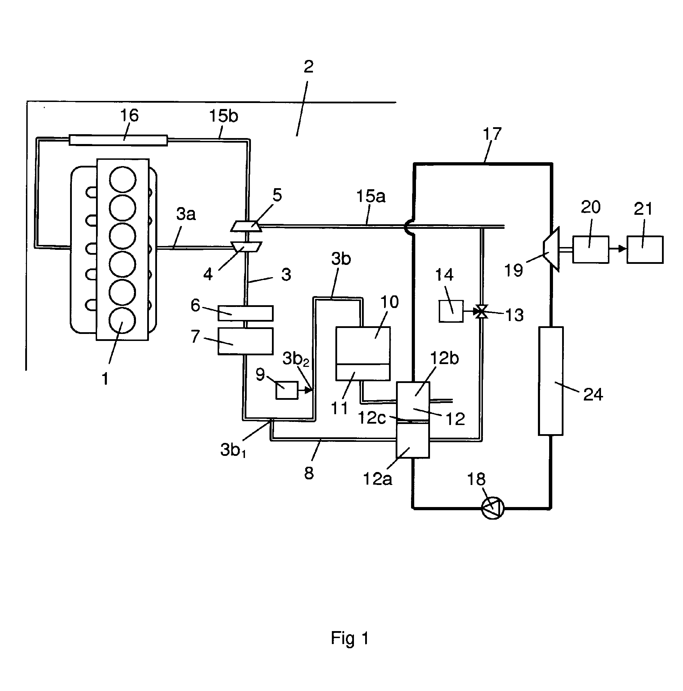

Fig. 1 depicts an arrangement for recovery of thermal energy from exhaust gases arising from a supercharged combustion engine 1 which may be an Otto engine or a diesel engine. The engine 1 may for example be intended to power a schematically indicated heavy vehicle 2. The exhaust gases from the engine's cylinders are led via an exhaust manifold to an exhaust line 3. The exhaust line comprises a first section 3a in which the exhaust gases are initially received from the engine. They will here in most operating states be at a high temperature and a high pressure. The exhaust gases in the first section 3a of the exhaust line are led to a turbine 4 which is part of a turbo unit. The turbine is thus provided with driving force which is transmitted, via a connection, to a compressor 5 which is part of the turbo unit. The exhaust gases are then led to a second section 3b of the exhaust line in which they will at least initially be at a lower temperature and a lower pressure through having expanded through the turbine. They pass through an oxidation catalyst 6 and a particle filter 7 in section 3b of the exhaust line. Section 3b further has a branch in the form of a first return line 8 for recirculation of exhaust gases. The first return line 8 receives exhaust gases at a point 3b₁ in the exhaust line. Section 3b of the exhaust line is provided with an injection device 9 for a urea solution. The injection device injects the urea solution at a point 3b₂ which is downstream of the point 3b₁ where the first return line 8 receives exhaust gases for recirculation. There is thus assurance that the urea solution will not be added to the recirculating exhaust gases. Section 3b of the exhaust line also comprises an SCR catalyst 10 and an ammonia slip catalyst 11. The exhaust gases in section 3b are led from the ammonia slip catalyst 11 to a second element 12b of an evaporator 12, in which they are cooled.

The engine is provided with a long-route EGR system for recirculation of exhaust gases whereby they are recirculated in the return line 8 from the second section 3b of an exhaust line which is thus situated downstream of the turbine 4. The return line 8 leads the recirculating exhaust gases to a first element 12a of the evaporator 12, in which they are cooled. The evaporator takes the form of a composite unit comprising two separate elements 12a, 12b on the exhaust side. It has a wall 12c which separates the two elements from one another. The EGR system comprises a first EGR valve 13 by which the exhaust flow in the return line 8 is regulated. A control unit 14 is adapted to operating the EGR valve 13 on the basis of information about the engine's current operating state. The control unit 14 may be a computer unit provided with suitable software for this purpose. The return line 8 is connected at a far end to a first inlet line 15a which is adapted to leading air and recirculating exhaust gases to the compressor 5. The compressor compresses the recirculating exhaust gases and the air. The compressed mixture of air and recirculating exhaust gases then proceeds via a second inlet line 15b towards the engine. The second inlet line is provided with a cooler 16 to cool the air and the recirculating exhaust gases.

The engine is provided with a WHR system for recovery of thermal energy. The WHR system is adapted to recovering heat from the exhaust gases in the second section 3b of the exhaust line and from the recirculating exhaust gases in the return line 8. The WHR system comprises a closed line circuit 17 with a circulating medium which has vaporisation and condensation temperatures which are appropriate for the purpose at the pressures which occur in the line circuit 17 during operation. The medium may be water. It is circulated in the line circuit 17 by a pump 18. The aforesaid evaporator 12 in which the medium is warmed to become vaporised is part of the WHR system. The medium is warmed by the recirculating exhaust gases in the return line 8 in the evaporator's first element 12a and by the exhaust gases in the exhaust line's second section 3b in the evaporator's second element 12b. The WHR system comprises an expander in the form of a turbine 19 in which the medium expands, providing the turbine with rotary motion which may be converted, via a mechanical transmission 20, to driving motion for the vehicle's power train 21. The WHR system comprises a condenser 24 in which the medium is cooled to a temperature at which it condenses. The WHR system may of course also comprise further components, e.g. a recuperator and a warming device to ensure that all of the medium is vaporised before entering the turbine 19.

During operation of the engine, exhaust gases are led out into the first section 3a of the exhaust line. They drive the turbine 4 which is part of the turbo unit so that the compressor 5 compresses a mixture of air and recirculating exhaust gases which is led to the engine. After the exhaust gases have passed through the turbine, they reach the oxidation catalyst 6, in which part of the nitrogen monoxide in them is oxidised to nitrogen dioxide. This means that the exhaust gases may contain equal proportions of nitrogen dioxide and nitrogen monoxide when they leave the oxidation catalyst. Exhaust gases which have passed through the oxidation catalyst are led to the particle filter 7 in which soot particles in them are caught and burnt. Part of the exhaust gases which have passed through the particle filter is led into the return line 8 at point 3b₁. The remaining portion of the exhaust gases proceeds into the second section 3b of the exhaust line. The injection device 9 injects a urea solution into them at point 3b₂. The urea solution is vaporised by the warm exhaust gases, resulting in the formation of ammonia. The ammonia reacts with the nitrogen oxides in the exhaust gases in the SCR catalyst 10, resulting in the formation of nitrogen gas and water vapour. With correct dosage of urea solution the nitrogen oxides in the exhaust gases may be greatly reduced. Any remaining ammonia is eliminated in the ammonia slip catalyst 11. The exhaust gases thereafter reach the second element 12b of the WHR system's evaporator 12, in which they are cooled by the medium in the WHR system before being gradually led out to the surroundings.

The control unit 14 operates the EGR valve 13 in such a way that a desired amount of the exhaust gases in the second section 3b of the exhaust line is led into the return line 8 at point 3b₁. The recirculating exhaust gases in the return line reach the evaporator's first element 12a, in which they are cooled by the medium in the WHR system. The cooled recirculating exhaust gases are thereafter mixed with air when they are led into the first inlet line 15a. The recirculating exhaust gases will here with advantage been cooled to a temperature close to that of the air. The exhaust gases and the air are led via the first inlet line 15a to the compressor 5. The mixture of air and recirculating exhaust gases is led to the compressor 5, in which it is compressed. The compressed mixture of air and recirculating exhaust gases thus acquire a raised pressure and a raised temperature. The mixture of air and recirculating exhaust gases proceeds to the second inlet line 15b, in which it is cooled in a cooler 16 before going on to the engine.

The WHR system is substantially continuously activated when the engine is in operation. The pump 18 pressurises and circulates the medium substantially continuously in the line circuit 17. The medium is in liquid form when it reaches the pump. It is circulated from the pump to the evaporator 12. The medium is warmed by the recirculating exhaust gases in the return line as a first stage in the evaporator's first element 12a and thereafter by the exhaust gases in the exhaust line 3b as a second stage in the evaporator's second element 12b. The evaporator is so dimensioned that the medium will undergo warming to a temperature at which it vaporises. The vaporised medium also undergoes a pressure increase by being warmed. The pressurised medium is led to the turbine 19, in which it expands. The turbine thereby acquires a rotary motion, which is transferred to the power train 21 of the vehicle 2 via the mechanical transmission 20. The power train is thus provided with greater force for operation of the vehicle. The driving force imparted enables the vehicle to maintain a speed demanded by the driver with a somewhat smaller fuel supply. The fuel consumption may thus be reduced. After the medium has passed through the turbine 19 it is led to the condenser 24, in which it is cooled to a temperature at which it condenses. A cooling medium, which may be air or coolant, is circulated through the condenser to ensure that the medium will cool and condense before being led back to the pump 18.

The WHR system makes it possible for the thermal energy normally cooled away from the recirculating exhaust gases and the thermal energy in the exhaust gases to be harnessed and used for operating the vehicle 2 or components on board the vehicle. The engine 1 thus acquires greater capacity and efficiency without extra fuel supply. The fact that the WHR system comprises an evaporator 12 for cooling the recirculating exhaust gases means that the long-route EGR system need not be provided with a separate EGR cooler. The WHR system is thus used to absorb thermal energy from the exhaust gases in the exhaust line 3, enabling it to recover thermal energy both from exhaust gases in the exhaust line and from recirculating exhaust gases in the return line. The WHR system comprises a common evaporator 12 for recovering thermal energy both from the recirculating exhaust gases in the return line and from the exhaust gases in the exhaust line. Such a common evaporator may be somewhat smaller than two separate evaporators with a similar capacity. A common evaporator also occupies less space in a vehicle than two separate evaporators. The WHR system may therefore be of compact construction. As a long-route EGR system does in itself have a positive effect on fuel consumption, it constitutes in conjunction with a WHR system as above a very advantageous combination as regards reducing a vehicle's fuel consumption and emissions of carbon dioxide.

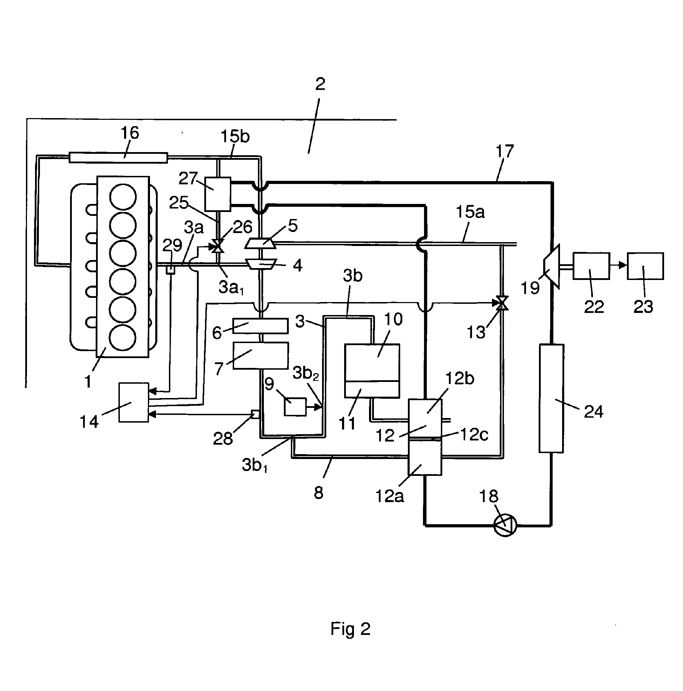

Fig. 2 depicts an alternative arrangement for recovery of thermal energy from exhaust gases arising from a combustion engine. This arrangement comprises a long-route EGR system with substantially the same configuration as the embodiment in Fig. 1. It is also comprises in this case a second EGR system in the form of a short-route system. The short-route EGR system has a second return line 25 for recirculation of exhaust gases. The second return line 25 receives exhaust gases from a position 3a₁ in the exhaust line 3 upstream of the turbine 4, and delivers the recirculating exhaust gases to the second inlet line 15b downstream of the compressor 5. The flow of recirculating exhaust gases through the second return line 25 is regulated by a second EGR valve 26 operated by a control unit 14.

The WHR system comprises also certain modifications relative to that depicted in Fig. 1. In this case it has a further second evaporator 27 in which the circulating medium is caused to be warmed by the recirculating exhaust gases in the second return line 25. The second evaporator 27 is situated downstream of a first evaporator 12, enabling the circulating medium in the WHR system to undergo warming as a further stage in the second evaporator before being led to the turbine 19. The arrangement comprises a first sensor 28 to monitor the temperature of the exhaust gases in the exhaust line at a point close to the first return line 8, and a second sensor 29 to monitor the temperature of the exhaust gases close to the second return line 25. The control unit 14 is adapted to receiving from said temperature sensors 28, 29 information to serve as a basis for operating the two EGR valves 13, 26. The WHR system's turbine 19 is in this case connected to a generator 22 to generate electrical energy which may be stored in a battery 23. This electrical energy may in appropriate situations be used for operating the vehicle 2 or components on board the vehicle.

During operation of the engine 1 the control unit 14 receives information about the engine's operating state which it uses as a basis for estimating or calculating a necessary amount of exhaust gases to be recirculated. It also receives information from the first sensor 28 which monitors the temperature of the exhaust gases in the vicinity of the point 3b₁ where the first return line 8 connects to the second section 3b of the exhaust line, and from the second sensor 29 which monitors the temperature of the exhaust gases in the vicinity of the point 3a₁ where the second return line 25 connects to the first section 3a of the exhaust line. The control unit assesses which of the sensors 28, 29 indicates the higher exhaust temperature. In operating situations where the first sensor 28 indicates the higher exhaust temperature, the control unit opens the first EGR valve 13 while at the same time closing the second EGR valve 26. The first EGR valve is opened sufficiently to allow the necessary amount of recirculating exhaust gases to be delivered via the first return line 8. In operating situations where the second sensor 28 indicates the higher exhaust temperature, the control unit opens the second EGR valve 26 while at the same time closing the first EGR valve 13. The second EGR valve 26 is opened sufficiently to allow the necessary amount of recirculating exhaust gases to be delivered via the second return line 25.

The WHR system may have an undepicted bypass line to lead the medium past the evaporator 12 in situations where the first EGR valve 13 is closed. The WHR system may also have an undepicted bypass line which leads the medium past the evaporator 27 in situations where the second EGR valve 26 is closed.

As described above, it will thus always be possible for the necessary amount of recirculating exhaust gases to be delivered to the engine. At the same time, they will be delivered by whichever of the EGR systems can do so at the higher temperature. The WHR system thus continuously recovers thermal energy from the exhaust gases in the exhaust line 3 via the second element 12b of the first evaporator, and thermal energy from the recirculating exhaust gases delivered by the EGR system which has the higher temperature. The WHR system may thus provide optimum warming of the circulating medium in all operating situations of the engine, and optimum generation of mechanical or electrical energy.

In the embodiment in Fig. 1 the arrangement comprises a WHR system which converts thermal energy to mechanical energy for direct operation of the vehicle. In the embodiment in Fig. 2 the arrangement comprises a WHR sytem which converts thermal energy to electrical engery. The arrangement in Fig. 1 may of course comprise a WHR system which generates electrical energy, and that in Fig. 2 may of course comprise a WHR system which generates mechanical energy for direct operation of the vehicle. The engine need not necessarily power a vehicle but may be used in any appropriate context.

## Claims

1. An arrangement for recovery of thermal energy from exhaust gases arising from a supercharged combustion engine, which arrangement comprises an exhaust line (3) adapted to leading exhaust gases out from the combustion engine (1), a turbine (4) driven by the exhaust gases in the exhaust line (3), at least a first EGR system which has a first return line (8) for recirculation of exhaust gases from a point (3b₁) situated downstream of the turbine (4) with respect to the intended direction of flow of the exhaust gases in the exhaust line (3), and a WHR system which comprises a closed line circuit (17), a pump (18) which pressurises and circulates a medium in the line circuit (17), at least a first evaporator (12) in which the medium is warmed and vaporised, an expander (19) in which the medium expands, and a condenser (24) in which the medium is cooled so that it condenses, **characterised in that** said first evaporator (12) is configured as a composite unit in which the circulating medium is caused to absorb thermal energy both from the recirculating exhaust gases in the first return line (8) and from exhaust gases in a section of the exhaust line (3b) situated downstream of the point (3b₁) in the exhaust line where the first return line (8) receives exhaust gases from the exhaust line (3).

2. An arrangement according to claim 1, **characterised in that** the first evaporator (12) comprises a first element (12a) in which the circulating medium is warmed as a first stage by the recirculating exhaust gases in the first return line (8), and a second element (12b) in which the circulating medium is warmed as a second stage by the exhaust gases in the second section (3b) of the exhaust line (3).

3. An arrangement according to claim 1 or 2, **characterised in that** the exhaust line (3) comprises an SCR catalyst (10) and an injection device (9) which is adapted to injecting urea solution at a point (3b₂) in the exhaust line (3) situated downstream of the point (3b₁) in the exhaust line where the first return line (8) receives exhaust gases from the exhaust line (3).

4. An arrangement according to claim 3, **characterised in that** the SCR catalyst (10) is situated in the exhaust line (3) at a point upstream of the first evaporator (12) .

5. An arrangement according to any one of the foregoing claims, **characterised in that** the exhaust line (3) comprises an oxidation catalyst (6) and a particle filter (7) which are situated upstream of the point (3b₁) where the first return line (8) receives exhaust gases from the exhaust line (3).

6. An arrangement according to any one of the foregoing claims, **characterised in that** arrangement comprises a second EGR system which has a second return line (25) for recirculation of exhaust gases from a point in the exhaust line (3a₁) upstream of the turbine (4).

7. An arrangement according to claim 6, **characterised in that** the WHR system comprises a second evaporator (27) in which the circulating medium is caused to absorb thermal energy from the recirculating exhaust gases in the second return line (25).

8. An arrangement according to claim 7, **characterised in that** the second evaporator (27) is situated downstream of the first evaporator (12) so that the medium in the WHR system may undergo a possible further warming in the second evaporator (27) before being led to the turbine (19).

9. An arrangement according to claim 7 or 8, **characterised in that** the arrangement comprises a control unit (14) adapted to controlling the recirculation of exhaust gases to whichever of the return lines (8, 25) can deliver the recirculating exhaust gases at the higher temperature.

10. An arrangement according to claim 9, **characterised in that** the arrangement is provided with a first temperature sensor (28) which monitors the temperature of the exhaust gases in the exhaust line in the close vicinity of the first return line (8), and with a second temperature sensor (29) which monitors the temperature of the exhaust gases in the exhaust line close to the second return line (25), and that the control unit (14) is adapted to receiving information from said temperature sensors (28, 29) and recirculating exhaust gases through whichever of the return lines (8, 25) can deliver the recirculating exhaust gases at the higher temperature.

11. A method for recovery of thermal energy from exhaust gases arising from a supercharged combustion engine by means of an arrangement according to any one of claims 1 to 10.

## Patentansprüche

1. Anordnung zum Rückgewinnen von thermischer Energie aus Abgasen, die in einem aufgeladenen Verbrennungsmotor entstehen, wobei die Anordnung einen Abgasstrang (3) umfasst, der dazu geeignet ist, Abgase von dem Verbrennungsmotor (1) abzuführen, eine von den Abgasen in dem Abgasstrang (3) angetriebene Turbine (4), wenigstens ein erstes EGR-System, das eine erste Rückführleitung (8) zum Rückführen der Abgase von einem Punkt (3b₁) aufweist, der bezüglich der vorgesehenen Strömungsrichtung der Abgase in dem Abgasstrang (3) stromabwärts der Turbine (4) angeordnet ist, und ein WHR-System, das einen geschlossenen Leitungskreis (17), eine Pumpe (18), die ein Medium in dem Leitungskreis (17) unter Druck setzt und zirkulieren lässt, wenigstens einen ersten Verdampfer (12), worin das Medium erwärmt und verdampft wird, einen Expander (19), worin das Medium expandiert, und einen Kondensor (24) umfasst, worin das Medium gekühlt wird, damit es kondensiert,
**dadurch gekennzeichnet, dass** der erste Verdampfer (12) als eine Verbundeinheit eingerichtet ist, worin das zirkulierende Medium dazu veranlasst wird, die thermische Energie von den umlaufenden Abgasen in der ersten Rückführleitung (8) und den Abgasen in einem Bereich des Abgasstrangs (3b), der stromabwärts des Punkts (3b₁) in dem Abgasstrang angeordnet ist, wo die erste Rückführleitung (8) die Abgase von dem Abgasstrang (3) aufnimmt, zu absorbieren.

2. Anordnung nach Anspruch 1, **dadurch gekennzeichnet, dass** der erste Verdampfer (12) ein erstes Element (12a), worin das zirkulierende Medium in einem ersten Schritt durch die umlaufenden Abgasen in der Rückführleitung (8) erwärmt wird, und ein zweites Element (12b) umfasst, worin das zirkulierende Medium in einem zweiten Schritt durch die Abgase in dem zweiten Bereich (3b) des Abgasstrangs erwärmt wird.

3. Anordnung nach Anspruch 1 oder 2, **dadurch gekennzeichnet, dass** der Abgasstrang (3) einen SCR-Katalysator (10) und eine Einspritzungsvorrichtung (9) umfasst, die dazu geeignet ist, Harnstofflösung an einem Punkt (3b₂) in den Abgasstrang (3) einzuspritzen, der stromabwärts des Punktes (3b₁) angeordnet ist, wo die erste Rückführleitung (8) die Abgase von dem Abgasstrang (3) aufnimmt.

4. Anordnung nach Anspruch 3, **dadurch gekennzeichnet, dass** der SCR-Katalysator (10) in dem Abgasstrang (3) an einem Punkt stromaufwärts des ersten Verdichters (12) angeordnet ist.

5. Anordnung nach einem der vorherigen Ansprüche, **dadurch gekennzeichnet, dass** der Abgasstrang (3) einen Oxidationskatalysator (6) und einen Partikelfilter (7) umfasst, der stromaufwärts des Punktes (3b₁) angeordnet ist, wo die erste Rückführleitung (8) die Abgase von dem Abgasstrang (3) aufnimmt.

6. Anordnung einem der vorherigen Ansprüche, **dadurch gekennzeichnet, dass** die Anordnung ein zweites EGR-System umfasst, das eine zweite Rückführleitung (25) zum Rückführen der Abgase von einem Punkt in dem Abgasstrang (3a₁) stromaufwärts der Turbine (4) aufweist.

7. Anordnung nach Anspruch 6, **dadurch gekennzeichnet, dass** das WHR-System einen zweiten Verdichter (27) umfasst, worin das zirkulierende Medium dazu veranlasst wird, die thermische Energie von den umlaufenden Abgasen in der zweiten Rückführleitung (25) zu absorbieren.

8. Anordnung nach Anspruch 7, **dadurch gekennzeichnet, dass** der zweite Verdichter (27) stromabwärts des ersten Verdichters (12) angeordnet ist, so dass das Medium in dem WHR-System einer weiteren möglichen Erwärmung in dem zweiten Verdichter (27) unterzogen werden könnte, bevor es zu der Turbine (19) geleitet wird.

9. Anordnung nach Anspruch 7 oder 8, **dadurch gekennzeichnet, dass** die Anordnung eine Steuereinheit (14) umfasst, die dazu geeignet ist, das Rückführen der Abgase zu steuern, welche den Rückführleitungen (8, 25) die umlaufenden Abgase bei einer höheren Temperatur bereitstellen kann.

10. Anordnung nach Anspruch 9, **dadurch gekennzeichnet, dass** die Anordnung mit einem ersten Temperatursensor (28) versehen ist, der die Temperatur der Abgase in dem Abgasstrang in einer nahen Umgebung der ersten Rückführleitung (8) überwacht, und mit einem zweiten Temperatursensor (29), der die Temperatur der Abgase in dem Abgasstrang nahe der zweiten Rückführleitung überwacht, und dass die Steuereinheit (14) dazu geeignet ist, Informationen von den Temperatursensoren (28, 29) aufzunehmen, und wobei umlaufende Abgase durch beliebige Rückführleitungen (8, 25) die umlaufenden Abgase bei einer höheren Temperatur bereitstellen können.

11. Verfahren zum Rückgewinnen von thermischer Energie aus Abgasen, die von einem aufgeladenen Verbrennungsmotor entstehen, **gekennzeichnet durch** Mittel einer Anordnung nach einem der Ansprüche 1 bis 10.

## Revendications

1. Agencement pour la récupération d'énergie thermique de gaz d'échappement émanant d'un moteur à combustion suralimenté, lequel agencement comprend un conduit d'échappement (3) adapté pour évacuer les gaz d'échappement du moteur à combustion (1), une turbine (4) entraînée par les gaz d'échappement dans le conduit d'échappement (3), au moins un premier système EGR qui comporte un premier conduit de retour (8) pour la recirculation des gaz d'échappement à partir d'un point (3b₁) situé en aval de la turbine (4) par rapport à la direction d'écoulement prévue des gaz d'échappement dans le conduit d'échappement (3), et un système WHR qui comprend un circuit de conduits (17) fermé, une pompe (18) qui pressurise et fait circuler un milieu dans le circuit de conduits (17), au moins un premier évaporateur (12) dans lequel le milieu est réchauffé et évaporé, un expanseur (19) dans lequel le milieu s'expanse, et un condenseur (24) dans lequel le milieu est refroidi de façon à se condenser, **caractérisé en ce que** ledit premier évaporateur (12) est configuré en tant qu'unité composite dans laquelle le milieu en circulation est amené à absorber l'énergie thermique à la fois des gaz d'échappement en recirculation dans le premier conduit de retour (8) et des gaz d'échappement dans une section du conduit d'échappement (3b) située en aval du point (3b₁) dans le conduit d'échappement où le premier conduit de retour (8) reçoit des gaz d'échappement du conduit d'échappement (3).

2. Agencement selon la revendication 1, **caractérisé en ce que** le premier évaporateur (12) comprend un premier élément (12a) dans lequel le milieu en circulation est réchauffé à un premier stade par les gaz d'échappement en recirculation dans le premier conduit de retour (8), et un second élément (12b) dans lequel le milieu en circulation est réchauffé à un second stade par les gaz d'échappement présents dans la seconde section (3b) du conduit d'échappement (3).

3. Agencement selon la revendication 1 ou 2, **caractérisé en ce que** le conduit d'échappement (3) comprend un catalyseur SCR (10) et un dispositif d'injection (9) adapté pour injecter une solution d'urée à un point (3b₂) dans le conduit d'échappement (3) situé en aval du point (3b₁) dans le conduit d'échappement où le premier conduit de retour (8) reçoit des gaz d'échappement du conduit d'échappement (3).

4. Agencement selon la revendication 3, **caractérisé en ce que** le catalyseur SCR (10) est situé dans le conduit d'échappement (3) en un point situé en amont du premier évaporateur (12).

5. Agencement selon l'une quelconque des revendications précédentes, **caractérisé en ce que** le conduit d'échappement (3) comprend un catalyseur d'oxydation (6) et un filtre à particules (7) qui sont situés en amont du point (3b1) où le premier conduit de retour (8) reçoit des gaz d'échappement du conduit d'échappement (3).

6. Agencement selon l'une quelconque des revendications précédentes, **caractérisé en ce que** l' agencement comprend un second système EGR qui comporte un second conduit de retour (25) pour la recirculation des gaz d'échappement à partir d'un point dans le conduit d'échappement (3a₁) en amont de la turbine (4).

7. Agencement selon la revendication 6, **caractérisé en ce que** le système WHR comprend un second évaporateur (27) dans lequel le milieu en circulation est amené à absorber l'énergie thermique des gaz d'échappement en recirculation dans le second conduit de retour (25).

8. Agencement selon la revendication 7, **caractérisé en ce que** le second évaporateur (27) est situé en aval du premier évaporateur (12) de sorte que le milieu dans le système WHR peut subir un éventuel réchauffage supplémentaire dans le second évaporateur (27) avant d'être conduit à la turbine (19).

9. Agencement selon la revendication 7 ou 8, **caractérisé en ce que** l'agencement comprend une unité de commande (14) adaptée pour commander la recirculation des gaz d'échappement vers celui des conduits de retour (8, 25) qui peut délivrer les gaz d'échappement en recirculation à la température la plus grande.

10. Agencement selon la revendication 9, **caractérisé en ce que** l'agencement est pourvu d'un premier capteur de température (28) qui surveille la température des gaz d'échappement dans le conduit d'échappement à proximité du premier conduit de retour (8), et d'un second capteur de température (29) qui surveille la température des gaz d'échappement dans le conduit d'échappement à proximité du second conduit de retour (25), et **en ce que** l'unité de commande (14) est adaptée pour recevoir des informations desdits capteurs de température (28, 29) et pour faire recirculer des gaz d'échappement via celui des conduits de retour (8, 25) qui peut délivrer les gaz d'échappement en recirculation à la température la plus grande.

11. Procédé de récupération de l'énergie thermique des gaz d'échappement émanant d'un moteur à combustion suralimenté au moyen d'un agencement selon l'une quelconque des revendications 1 à 10.
